(19) Europäisches Patentamt
European Patent Office
Office européen des brevets

(11) **EP 1 375 272 B1**

(12) **EUROPÄISCHE PATENTSCHRIFT**

(45) Veröffentlichungstag und Bekanntmachung des Hinweises auf die Patenterteilung:
**02.11.2006  Patentblatt 2006/44**

(51) Int Cl.:
*B60S 1/08* *(2006.01)*       *F16H 1/36* *(2006.01)*
*F16H 1/28* *(2006.01)*       *H02K 7/116* *(2006.01)*

(21) Anmeldenummer: **03002702.3**

(22) Anmeldetag: **06.02.2003**

(54) **Stellantrieb**

Actuator

Actionneur

(84) Benannte Vertragsstaaten:
**DE ES FR IT SK**

(30) Priorität: **28.06.2002  DE 10229602**

(43) Veröffentlichungstag der Anmeldung:
**02.01.2004  Patentblatt 2004/01**

(73) Patentinhaber: **ROBERT BOSCH GMBH**
**70442 Stuttgart (DE)**

(72) Erfinder:
• **Neubauer, Achim**
**76547 Sinzheim-Vormberg (DE)**
• **Moench, Jochen**
**76547 Sinzheim (DE)**

(56) Entgegenhaltungen:
EP-A- 0 253 999       DE-A1- 3 808 771
DE-A1- 4 412 898       DE-A1- 19 946 938
DE-C1- 19 748 201       DE-U1- 8 513 219

**Beschreibung**

Stand der Technik

Die Erfindung geht von einem Stellantrieb nach dem Oberbegriff des Anspruchs 1 aus.

Grundsätzlich besteht ein Wunsch nach immer leistungsstärkeren und kompakteren Stellantrieben. In der Kraftfahrzeugindustrie werden diese z.B. zum Antrieb von Scheibenwischern, Fensterhebern, Sitzen, Schiebedächern oder dgl. eingesetzt. Insbesondere bei Zweimotoren-Wischanlagen werden Stellantriebe benötigt, die ein sehr hohes Moment erzeugen und in einem äußerst beengten Bauraum untergebracht werden müssen. Ziel ist es z.B. einen Stellantrieb mit einem Bauvolumen bis zu 600 cm$^3$ zu schaffen, der mit einem reversierbaren Elektromotor mit 60 Zyklen pro Sekunde ein Abtriebsmoment von 35 Nm erzeugt.

Aus der DE 100 03 350 A 1 ist eine Verstellvorrichtung zum Verstellen eines zweiten Teiles gegenüber einem ersten Teil, insbesondere zum Verstellen von Gelenkteilen bekannt, wie z.B. Robotergelenkteilen. Die Vorrichtung umfasst einen Elektromotor, z.B. einen schnell laufenden Elektromotor kleiner Baugröße mit einem geringen Drehmoment, der über ein Planetengetriebe mit einer hohen Untersetzung das erste Bauteil zum zweiten Bauteil verstellt. Das Planetengetriebe ist als ein reduziertes Koppelgetriebe ausgebildet, das auch kurz Wolfrom-Getriebe genannt wird. Es besitzt zwei Zentralräder, die als Hohlräder mit Innenverzahnungen ausgebildet sind, und jeweils mit Planetenrädern mit entsprechenden Außenverzahnungen kämmen. Ein Zentralrad ist mit dem ersten Bauteil fest verbunden, während das andere Zentralrad mit dem zweiten Bauteil fest verbunden und relativ zum ersten Zentralrad drehbar gelagert ist.

In der Regel ist das erste Bauteil ortsfest, indem es beispielsweise mit einem Gehäuseteil des Elektromotors verbunden ist. Das erste Zentralrad bildet mit den ihm zugeordneten Planetenrädern eine erste Getriebestufe, während das zweite Zentralrad mit den ihm zugeordneten Planetenrädern eine zweite Getriebestufe bildet. Die Planetenräder beider Getriebestufen sind jeweils drehfest miteinander verbunden. Eine der Getriebestufen wird von der Motorwelle des Elektromotors über ein Sonnenrad angetrieben. Durch die Wahl der Übersetzungen der Getriebestufen kann erreicht werden, dass der Abtrieb des Stellantriebs relativ zum Antrieb eine gleiche oder eine entgegengesetzte Drehrichtung aufweist. Ferner ergibt sich aus einer hohen Untersetzung des bekannten Planetengetriebes verbunden mit einem entsprechenden Wirkungsgrad eine Selbsthemmung, so dass zwar vom Antrieb zum Abtrieb ein Drehmoment übertragen werden kann, jedoch nicht in umgekehrter Richtung vom Abtrieb zum Antrieb hin.

Aus der US 4 918 344 ist ferner ein langsam laufender Servoantrieb für Roboter und ähnlich automatisch steuerbare Maschinen bekannt. Der Antriebsmotor umfasst beispielsweise einen Gleichstrommotor, einen Wechselstrommotor, einen Direktantriebsmotor oder einen Schrittmotor, der mit einem hoch untersetzenden Planetengetriebe zusammenarbeitet. Das Planetengetriebe ist ein Reibungsplanetengetriebe, bei dem die Momente zwischen den Getriebeelementen, den Zentralrädern und den Planetenrädern, kraftschlüssig durch Reibung übertragen werden. Die Zentralräder und die Planetenräder sind als Rollen ausgebildet. Durch Schlupf zwischen den Getriebeelementen ist eine eindeutige Zuordnung der Stellbewegung am Antrieb zur Stellbewegung am Abtrieb nicht gewährleistet.

Das Planetengetriebe, das kompakt und leicht gestaltet ist, ist zumindest teilweise innerhalb eines hohlzylindrischen Rotors des Elektromotors untergebracht. Der Rotor treibt über eine Scheibe ein Sonnenrad einer ersten Getriebestufe an, deren Planetenräder in kraftschlüssiger Verbindung mit dem Sonnenrad und einem ersten Hohlrad stehen, das mit dem Gehäuse des Elektromotors drehfest verbunden ist. Ein Planetenträger, an dem die Planetenräder, der ersten Getriebestufe drehbar gelagert sind, ist mit einem weiteren Sonnenrad gekoppelt, das mit entsprechenden Planetenrädern und einem zweiten Hohlrad zu einer zweiten Getriebestufe gehört. Ein zweiter Planetenträger, an dem die Planeten der zweiten Getriebestufe drehbar gelagert sind, ist mit der Abtriebswelle des Stellantriebs gekoppelt, während die Planetenräder sich kraftschlüssig an dem zweiten gehäusefesten Hohlrad abstützen. Das Planetengetriebe, das auch als einstufiges Getriebe ausgebildet sein kann, besitzt keine Selbsthemmung.

Aus der DE 198 00 989 A1 sind Zahnräder bekannt, deren Verzahnung aus Kunststoff auf einen Träger angespritzt ist.

Mit der DE-A-38 08 771 ist ein verzahntes Kegelradgetriebe bekannt geworden, bei dem auf einem Steg gelagerte Kegelräder als Planetenräder eine Antriebswelle in Drehung versetzten. Dabei kämmt das kegelförmige Planetenrad mit zwei Zentralzahnrädern, die eine Schrägverzahnung aufweisen. Durch die unterschiedliche Zähnenanzahl zwischen dem ersten gehäusefesten Zentralzahnrad und dem zweiten an der Abtriebswelle angeordneten Zentralrad wird eine entsprechende Untersetzung erzielt.

Vorteile der Erfindung

Nach der Erfindung sind die Zentralräder des Planetengetriebes als Kronräder ausgebildet und beide auf der gleichen Seite des Stellantriebs angeordnet. Der Elektromotor treibt einen Planetenträger an, an dem die als Ritzel ausgebildeten Planetenräder um eine im Wesentlichen radial zur Drehachse der Abtriebswelle verlaufende Drehachse der Planetenräder drehbar gelagert sind.

Die Forderung nach geringem Bauvolumen bedingt für eine Antriebseinheit aus Motor und Getriebe einen hohen Getriebewirkungsgrad. Diese Voraussetzung erfüllen neben den Stirn- und Kegelradgetrieben auch die Kronradgetriebe. Ihr Aufbau ähnelt dem eines Kegelradgetriebes, wobei wegen der einfachen, vorteilhaften Verzahnung der Planetenräder in Form einer Evolventenverzahnung die Herstellung vereinfacht und ein axiales Einstellen der Planetenräder unnötig ist. Analog zu den Stirnradgetrieben ist eine Genauigkeit nur in einer Achse erforderlich. Die Herstellung der Zentralräder als Kronräder mit einer komplexeren Geometrie ist unproblematisch, weil sie in Ausgestaltung der Erfindung aus Kunststoff im Spritzgussverfahren oder mittels Kaltumformen hergestellt werden können. Zur Geräuschoptimierung ist es zweckmäßig, die Verzahnung der Zentralräder und Planetenräder als Hochverzahnung auszuführen, deren Auslegung allgemein bekannt ist.

Das Kronradgetriebe kann einen Radsatz aus einem herkömmlichen, evolventisch verzahnten Ritzel und einem Kronenrad aufweisen. Dieses wird axial eingestellt, während die axiale Lage des Ritzels innerhalb der Zahnbreite beliebig ist. Ferner ist die Neigung der Drehachse des Ritzels zur Drehachse des Kronrads beliebig. Verglichen mit konventionellen Kegelrädern ist die Einstellung beim Kronradgetriebe sehr einfach. Einbauabweichungen z.B. als Folge von Temperaturwechseln und Fertigungstoleranzen haben keinen Einfluss auf den Wälzkreis und es entstehen keine axialen Kräfte, die auf die Ritzelwelle wirken. Schließlich sind Getriebe mit Achsversatz und Schrägverzahnung möglich. Da der Gleitanteil gegenüber den herkömmlichen Schneckengetrieben wesentlich kleiner ist, ist der Wirkungsgrad vergleichbar mit dem eines Stirnradgetriebes.

Der erfindungsgemäße Stellantrieb eignet sich vor allem in Kombination mit einem elektronisch kommutierten Gleichstrommotor, wobei der Planetenträger mit einer Nabe auf der Abtriebswelle gelagert ist und am äußeren Umfang einen zylindrischen Mantel besitzt, auf dem ein Rotor des Elektromotors sitzt. Das Planetengetriebe in Form eines Kronradgetriebes nutzt somit den Hohlraum innerhalb des Rotors. Da die Zentralräder nur an einer Seite des Stellantriebs angeordnet sind, bleibt der Rotor auf der anderen Seite zugänglich, so dass hier die Rotorlage für die Kommutierung des Elektromotors leicht erfasst werden kann.

Ferner dient der Hohlraum innerhalb des Rotors an dieser Seite dazu, um die, elektronische Steuerelemente unterzubringen. Hierzu weist eine Gehäusewand innerhalb eines Bereichs des Rotors nach innen eine Einbuchtung auf, in der die elektronischen Steuerelemente angebracht sind. In der Einbuchtung können auch Kühlrippen vorgesehen sein, ohne den sonst erforderlichen Bauraum nennenswert zu vergrößern. In diesem Fall können die elektronischen Steuerelemente zwischen den Kühlrippen angeordnet werden oder an der Innenseite der Gehäusewand. Die Gehäusewand ist vorteilhafterweise als Gehäusedeckel ausgebildet und umfasst ein Lager für eine Abtriebswelle des Stellantriebs. Sie bildet mit einem Stator des Elektromotors und einem Gehäusedeckel auf der gegenüberliegenden Seite das Gehäuse des Stellantriebs. Um eine bessere Zugänglichkeit der elektronischen Steuerelemente zu gewährleisten, ist es zweckmäßig, die Zentralräder an der Abtriebsseite des Stellantriebs anzuordnen.

Die Untersetzung des Planetengetriebes liegt zweckmäßigerweise bei einem Nennmoment von ungefähr 35 Nm des Elektromotors zwischen 1 zu 15 und 1 zu 20. Dies kann beispielsweise dadurch erreicht werden, dass das gehäusefeste, erste Zentralrad 33 Zähne, das zweite Zentralrad auf der Abtriebswelle 43 Zähne, das erste Planetenrad, das dem ersten Zentralrad zugeordnet ist, 17 Zähne und das zweite Planetenrad, das dem zweiten Zentralrad zugeordnet ist, 11 Zähne aufweisen. Dies ergibt eine Untersetzung von 1 zu 19,2. Bei einen Gesamtwirkungsgrad von 85% und einem geforderten Abtriebsmoment von 35 Nm muss das Antriebsmoment des Elektromotors 2,15 Nm betragen.

Zeichnung

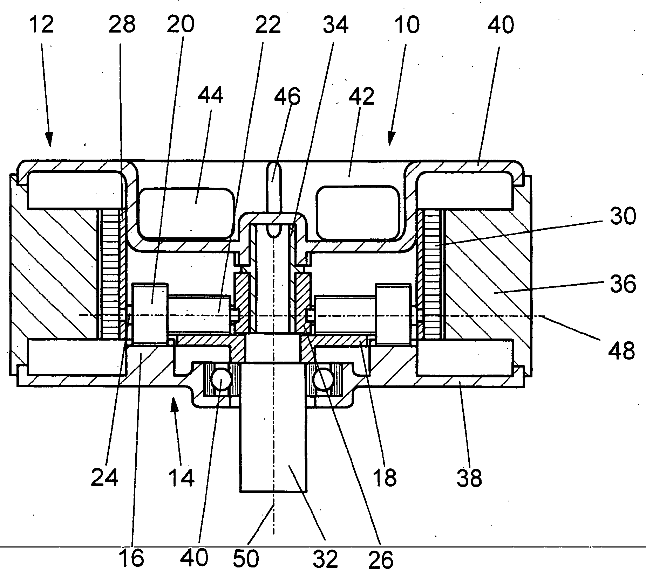

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Die einzige Figur zeigt einen schematischen Längsschnitt durch einen erfindungsgemäßen Stellantrieb.

Beschreibung des Ausführungsbeispiels

Ein Stellantrieb 10 ist im wesentlichen aus einem Elektromotor 12 in Form eines elektronisch kommutierten Hohlwelleninnenläufermotors und einem Planetengetriebe 14 aufgebaut. Der Elektromotor besitzt einen Stator 36, der zusammen mit zwei seitlichen Gehäusedeckeln 38, 40 das Gehäuse des Stellantriebs 10 bildet. In den Gehäusedeckeln 38, 40, den Seitenwänden des Gehäuses, ist eine Abtriebswelle 32 in Lagern 34 und 40 um eine Drehachse 50 drehbar gelagert. Auf der Abtriebswelle 32 ist ein Planetenträger des Planetengetriebes 14 drehbar gelagert, der eine Nabe 26 und einen Mantel 28 umfasst. Zwischen der Nabe 26 und dem Mantel 28 sind Planetenräder 20, 22 angeordnet, die in der Nabe 26 bzw. im Mantel 28 auf einer Planetenachse 24 drehbar gelagert sind. Dabei ist es möglich, dass die Planetenräder 20, 22, die drehfest miteinander verbunden sind, fest auf der Planetenachse 24 sitzen und diese drehbar in der Nabe 26 bzw. dem Mantel 28 gelagert ist, oder dass die Planetenachse 24 fest in der Nabe 26 bzw. dem Mantel 28 sitzt, und die Planetenräder 20, 22 drehbar auf der Planetenachse 24 gelagert sind. Die Drehachse 48 der Planetenräder 20, 22 verläuft im Wesentlichen radial zur Drehachse 50 der Abtriebswelle 32.

Die Planetenräder 20, 22 kämmen mit Kronrädern 16, 18, die an einer Seite des Stellantriebs 10, und zwar in dem dargestellten Ausführungsbeispiel an der Abtriebsseite angeordnet sind. Dem äußeren, gehäusefesten, ersten Kronrad 16 ist das erste Planetenrad 20 und dem innen liegenden zweiten Kronrad 18 ist das zweite Planetenrad 22 zugeordnet. Die Verzahnung der Kronräder 16, 18 sowie der Planetenräder 20, 22 kann aus Kunststoff bestehen und im Spritzgussverfahren in einfacher Weise hergestellt werden. Dabei erhalten die Planetenräder 20, 22 als einfache Ritzel zweckmäßigerweise eine Evolventenverzahnung. Diese kann auch als Hochverzahnung und/oder als Schrägverzahnung ausgeführt werden, um Geräusche zu reduzieren und relativ große Momente übertragen zu können. Das gehäusefeste, erste Zentralrad 16 bildet zweckmäßigerweise mit dem Gehäusedeckel 38 ein Bauteil, wobei die Verzahnung, wie bereits erwähnt, unmittelbar auf den Deckel 38 aufgespritzt werden kann. Das zweite Zentralrad 18 sitzt drehfest auf der Abtriebswelle 32. Der Planetenträger 26, 28 wird von einem Rotor 30 des Elektromotors 12 angetrieben. Der Rotor 30 sitzt auf dem Mantel 28 des Planetenträgers oder bildet mit diesem in vorteilhafter Weise eine Baueinheit, wobei es zweckmäßig ist, dass seine Magnete gleichzeitig zum Fixieren der Planetenachsen 24 dienen. Beim Antrieb durch den Elektromotor 12 wird das Drehmoment über die Planetenräder 20, 22 auf das zweite Kronrad 18 und damit auf die Abtriebswelle 32 übertragen. Die Übersetzung des Planetengetriebes 14 ergibt sich aus folgender Formel:

$$\frac{n_{Abtrieb}}{n_{Antrieb}} = \left(1 - \frac{Z_{Zentralrad\,1}}{Z_{Planetenrad\,1}} * \frac{Z_{Planetenrad\,2}}{Z_{Zentralrad\,2}}\right)$$

wobei

$n_{Abtrieb}$ = Drehzahln an der Abtriebswelle 32,
$n_{Abtrieb}$ = Drehzahln am Rotor 30;
$Z_{zentralrad1}$ = Zähnezahl des Zentralrads 16,
$Z_{zentralrad2}$ = Zähnezahl des Zentralrads 18,
$Z_{Planetenrad1}$ = Zähnezahl des Planetenrads 20 und
$Z_{Planetenrad2}$ = Zähnezahl des Planetenrads 22 bedeuten

Die Zähnezahlen werden zweckmäßigerweise so gewählt, dass sich eine Gesamtuntersetzung etwa zwischen eins zu fünfzehn bis eins zu zwanzig ergibt. Mit Zähnezahlen $Z_{Zentralrad1}$ gleich dreiundsechzig und $Z_{Planetenrad1}$ gleich siebzehn, $Z_{Planetenrad2}$ gleich elf und $Z_{Zentralrad2}$ gleich dreiundvierzig ergibt sich beispielsweise eine Untersetzung von eins zu neunzehn, die bei einem Getriebewirkungsgrad von fünfundachtzig Prozent und einem geforderten Antriebsmoment von fünfunddreißig Nm ein Antriebsdrehmoment des Elektromotors 12 von ca. zwei Nm bedeutet.

Da das Planetengetriebe 14 nur ein Teil des vom Mantel 28 und Rotor 30 umschlossenen Hohlraums beansprucht und auf einer Seite des Stellantriebs 10 angeordnet ist, kann der andere Teil, der von der Seite aus frei zugänglich ist, anderweitig benutzt werden, z.B. um die Lage des Rotors 30 für eine Kommutierung zu erfassen. Ferner kann der Gehäusedeckel 40 auf dieser Seite eine Einbuchtung 42 aufweisen, in der Steuerelemente 44 für die Ansteuerung des Elektromotors 12 und Kühlrippen 46 zur Kühlung des Stellantriebs 10 angeordnet werden können ohne mehr Einbauraum zu beanspruchen. Dabei können die Steuerelemente 44 entweder außen in der Einbuchtung 42 ggf. zwischen den Kühlrippen 46 angebracht werden oder an der Innenseite der Einbuchtung 42. Im letzteren Fall ist die Tiefe der Einbuchtung 42 auf die Einbauverhältnisse, die Steuerelemente 44 und die Kühlrippen 46 abzustimmen.

Bezugszeichen

| | |
|---|---|
| 10 | Stellantrieb |
| 12 | Elektromotor |
| 14 | Planetengetriebe |
| 16 | erstes Kronrad |
| 18 | zweites Kronrad |
| 20 | erstes Planetenrad |
| 22 | zweites Planetenrad |
| 24 | Planetenachse |
| 26 | Nabe |
| 28 | Mantel |
| 30 | Rotor |
| 32 | Abtriebswelle |
| 34 | Lager |
| 36 | Stator |
| 38 | Gehäusedeckel |
| 40 | Gehäusedeckel |
| 42 | Einbuchtung |
| 44 | Steuerelement |
| 46 | Kühlrippe |
| 48 | Drehachse |
| 50 | Drehachse |

Patentansprüche

1. Stellantrieb (10) mit einem Elektromotor (12), der über ein Zahnradgetriebe (14) in Planetenbauweise, das ein erstes gehäusefestes Zentralrad (16) und ein zweites drehbares Zentralrad (18) umfasst, eine Abtriebswelle (32) antreibt, wobei die Zentralräder (16, 18) auf der gleichen Seite des Stellantriebs (10) angeordnet sind, und der Elektromotor (12) einen Planetenträger (26) antreibt, an dem Planetenräder (20, 22) um eine im Wesentlichen radial zur Drehachse (50) der Abtriebswelle (32) verlaufende Drehachse (48) der Planetenräder (20, 22) drehbar gelagert sind, **dadurch gekennzeichnet, dass** die Zentralräder (16, 18) als Kronräder und die Planetenräder (20, 22) als Ritzel ausgebildeten sind, wobei beide Zentralräder (16, 18) jeweils mit mindestens einem Planetenrad (20, 22) Getriebestufen mit unterschiedlichen Untersetzungen bilden, und das zum ersten Zentralrad (16) gehörige, erste Planetenrad (20) mit dem zum zweiten Zentralrad (18) gehörigen, zweiten Planetenrad (22) drehfest verbunden ist, und das Zahnradgetriebe (14) innerhalb eines Rotors (30) des Elektromotors (12) auf einer Seite des Stellantriebs (10) angeordnet ist, und an der gegenüberliegenden Seite des Stellantriebs (10) eine Gehäusewand (40) innerhalb eines Bereichs des Rotors (30) nach innen eine Einbuchtung (42) zur Anordnung elektronischer Steuerelemente (44) aufweist.

2. Stellantrieb (10) nach Anspruch 1, **dadurch gekennzeichnet, dass** die Planetenräder (20, 22) eine Evolventenverzahnung aufweisen.

3. Stellantrieb (10) nach Anspruch 2, **dadurch gekennzeichnet, dass** die Verzahnung eine Hochverzahnung ist.

4. Stellantrieb (10) nach einem der vorhergehenden Ansprüche, **dadurch gekennzeichnet, dass** die Verzahnung der beiden Zentralräder (16, 18) und/ oder der Planetenräder (20, 22) mittels Fließpressen oder Kunststoff-Spritzgussverfahren hergestellt ist.

5. Stellantrieb (10) nach einem der vorhergehenden Ansprüche, **dadurch gekennzeichnet, dass** der Elektromotor (12) ein elektronisch kommutierter Gleichstrommotor ist, dass der Planetenträger (26, 28) mit einer Nabe (26) auf der Abtriebswelle (32) gelagert ist und am äußeren Umfang einen zylindrischen Mantel (28) besitzt, auf dem der Rotor (30) des Elektromotors (12) sitzt.

6. Stellantrieb (10) nach Anspruch 5, **dadurch gekennzeichnet, dass** der Mantel (28) und der Rotor (30) einstückig ausgebildet sind und die Planetenachsen (24) nach der Montage durch die Befestigung der Magnete des Rotors (30) fixiert sind.

7. Stellantrieb (10) nach einem der vorhergehenden Ansprüche, **dadurch gekennzeichnet, dass** die Zentralräder (16, 18) an der Abtriebsseite des Stellantriebs (10) angeordnet sind.

8. Stellantrieb (10) nach Anspruch 1, **dadurch gekennzeichnet, dass** in der Einbuchtung (42) elektronische Steuerelemente (44) angebracht sind.

9. Stellantrieb (10) nach Anspruch 1, **dadurch gekennzeichnet, dass** in der Einbuchtung (42) Kühlrippen (46) und an der Innenwand elektronische Steuerelemente (44) vorgesehen sind.

10. Stellantrieb (10) nach einem der vorhergehenden Ansprüche, **dadurch gekennzeichnet, dass** bei einem Nennmoment von ungefähr fünfunddreißig Nm des Elektromotors (12) das Planetengetriebe (14) eine Untersetzung zwischen eins zu fünfzehn und eins zu zwanzig besitzt.

11. Stellantrieb (10) nach Anspruch 10, **dadurch gekennzeichnet, dass** das gehäusefeste, erste Zentralrad (16) dreiundsechzig, das zweite Zentralrad (18) auf der Abtriebswelle (32) dreiundvierzig, das erste Planetenrad (16) siebzehn und das zweite Planetenrad (18) elf Zähne aufweisen.

**Claims**

1. Actuating drive (10) having an electric motor (12) which drives a drive output shaft (32) via an epicyclic gearwheel mechanism (14) which comprises a first central wheel (16), which is fixed to the housing, and a second, rotatable central wheel (18), wherein the central wheels (16, 18) are arranged on the same side of the actuating drive (10) and the electric motor (12) drives a planet carrier (26), planet gears (20, 22) being mounted on said planet carrier (26) so as to be rotatable about a rotational axis (48), which runs substantially radially with respect to the rotational axis (50) of the drive output shaft (32), of the planet gears (20, 22), **characterized in that** the central wheels (16, 18) are formed as crown wheels and the planet gears (20, 22) are formed as pinions, wherein the two central wheels (16, 18) form, in each case with at least one planet gear (20, 22), transmission stages having different transmission ratios, and wherein the first planet gear (20), which is assigned to the first central wheel (16), is connected in a rotationally fixed manner to the second planet gear (22) which is assigned to the second central wheel (18), and wherein the gearwheel mechanism (14) is arranged within a rotor (30) of the electric motor (12) on one side of the actuating drive (10), and wherein, at the opposite side of the actuating drive (10), a housing wall (40) within a region of the rotor (30) has an inward recess (42) for arranging electronic control elements (44).

2. Actuating drive (10) according to Claim 1, **characterized in that** the planet gears (20, 22) have an involute toothing.

3. Actuating drive (10) according to Claim 2, **characterized in that** the toothing is a deep tooth gearing.

**4.** Actuating drive (10) according to one of the preceding claims, **characterized in that** the toothing of the two central wheels (16, 18) and/or of the planet gears (20, 22) is produced by means of extrusion or a plastic injection moulding process.

**5.** Actuating drive (10) according to one of the preceding claims, **characterized in that** the electric motor (12) is an electronically commutated DC motor, **in that** the planet carrier (26, 28) is mounted by means of a hub (26) on the drive output shaft (32) and has, at the outer circumference, a cylindrical casing (28) on which the rotor (30) of the electric motor (12) is seated.

**6.** Actuating drive (10) according to Claim 5, **characterized in that** the casing (28) and the rotor (30) are formed in one piece and the planet axes (24) are fixed after assembly by the fastening of the magnets of the rotor (30).

**7.** Actuating drive (10) according to one of the preceding claims, **characterized in that** the central wheels (16, 18) are arranged at the drive output side of the actuating drive (10).

**8.** Actuating drive (10) according to Claim 1, **characterized in that** electronic control elements (44) are attached in the recess (42).

**9.** Actuating drive (10) according to Claim , **characterized in that** cooling fins (46) are provided in the recess (42) and electronic control elements (44) are provided on the inner wall.

**10.** Actuating drive (10) according to one of the preceding claims, **characterized in that**, at a nominal torque of approximately fifty-three Nm of the electric motor (12), the epicyclic transmission (14) has a step-down transmission ratio of between one to fifteen and one to twenty.

**11.** Actuating drive (10) according to Claim 10, **characterized in that** the first central wheel (16), which is fixed to the housing, has sixty-three teeth, the second central wheel (18), which is on the drive output shaft (32), has forty-three teeth, the first planet gear (16) has seventeen teeth and the second planet gear (18) has eleven teeth.

**Revendications**

**1.** Actionneur (10) comprenant un moteur électrique (12), qui par un engrenage planétaire (14) présentant une première roue centrale (16) solidaire du boîtier et une deuxième roue centrale (18) rotative entraîne un arbre de sortie (32), les roues centrales (16, 18) étant disposées du même côté de l'actionneur (10), et le moteur électrique (12) entraînant un porte-satellites (26) portant les roues satellites (20, 22) en rotation autour d'un axe de rotation (48) des satellites (20, 22) s'étendant pour l'essentiel radialement par rapport à l'axe de rotation (50) de l'arbre de sortie (32),
**caractérisé en ce que**
les roues centrales (16, 18) sont des roues à couronne et les roues satellites (20, 22) sont des pignons, les deux roues centrales (16, 18) formant chacune avec au moins une roue satellite (20, 22) des niveaux d'engrenage avec différents rapports de démultiplication, et
la première roue satellite (20) associée à la première roue centrale (16) est solidaire en rotation de la deuxième roue satellite (22) associée à la deuxième roue centrale (18), et
l'engrenage (14) est disposé à l'intérieur d'un rotor (30) du moteur électrique (12) sur un côté de l'actionneur (10), alors que du côté opposé de l'actionneur (10) une paroi de boîtier (40) présente à l'intérieur d'une zone du rotor (30) un creux (42) vers l'intérieur pour la disposition d'éléments de commande électroniques (44).

**2.** Actionneur (10) selon la revendication 1, **caractérisé en ce que** les roues satellites (20, 22) présentent une denture à développante.

**3.** Actionneur (10) selon la revendication 2, **caractérisé en ce que** la denture est une denture verticale.

**4.** Actionneur (10) selon l'une quelconque des revendications précédentes, **caractérisé en ce que** la denture des deux roues centrales (16, 18) et/ou des roues satellites (20, 22) est fabriquée par extrusion ou par moulage par injection de matière plastique.

**5.** Actionneur (10) selon l'une quelconque des revendications précédentes, **caractérisé en ce que** le moteur électrique (12) est un moteur à courant continu à commutation électronique, et le porte-satellites (26, 28) est logé par un moyeu (26) sur l'arbre de sortie (32) et présente en périphérie extérieure une enveloppe cylindrique (28) portant le rotor (30) du moteur électrique (12).

**6.** Actionneur (10) selon la revendication 5, **caractérisé en ce que** l'enveloppe (28) et le rotor (30) sont formés d'une seule pièce et les axes de satellite (24) sont fixés après le montage par la fixation des aimants du rotor (30).

7. Actionneur (10) selon l'une quelconque des revendications précédentes,
**caractérisé en ce que**
les roues centrales (16, 18) sont disposées du côté sortie de l'actionneur (10).

8. Actionneur (10) selon la revendication 1,
**caractérisé en ce que**
dans le creux (42) sont disposés des éléments de commande électroniques (44).

9. Actionneur (10) selon la revendication 1,
**caractérisé en ce que**
dans le creux (42) sont prévus des nervures de refroidissement (46) et sur la paroi intérieure des éléments de commande électroniques (44).

10. Actionneur (10) selon l'une quelconque des revendications précédentes,
**caractérisé en ce que**
pour un couple nominal d'environ 35 Nm du moteur électrique (12) l'engrenage planétaire (14) présente un rapport de réduction entre 1/15 et 1/20.

11. Actionneur (10) selon la revendication 10,
**caractérisé en ce que**
la première roue centrale (16) solidaire du boîtier présente 63 dents, la deuxième roue centrale (18) sur l'arbre de sortie (32) 43 dents, la première roue satellite (16) 17 dents et la deuxième roue satellite (18) 11 dents.